## Europäisches Patentamt
## European Patent Office
## Office européen des brevets

(19)

(11) Publication number: **0 074 667**
**A1**

(12) # EUROPEAN PATENT APPLICATION

(21) Application number: **82108472.0**

(22) Date of filing: **14.09.82**

(51) Int. Cl.³: **G 10 L 1/04**

(30) Priority: **14.09.81 US 302175**

(43) Date of publication of application:
**23.03.83 Bulletin 83/12**

(84) Designated Contracting States:
**AT BE CH DE FR GB IT LI LU NL SE**

(71) Applicant: **LEAR SIEGLER, INC.**
**3171 South Bundy Drive**
**Santa Monica California 90405(US)**

(72) Inventor: **Eckley, Gordon D.**
**2144 S. Skylark Circle**
**Corona California 91720(US)**

(74) Representative: **Patentanwälte Schaumburg**
**Schulz-Dörlam & Thoenes**
**Mauerkircherstrasse 31 Postfach 80 15 60**
**D-8000 München 80(DE)**

(54) **Speech recognition system.**

(57) A speaker-dependent word recognition system (100) operable in a severe acoustical environment compares linear predictive parameter signals representative of unknown utterances spoken by an operator with similar parameter signals representative of a predetermined library of reference utterances, and accepts or rejects identification of the unknown utterances as one of the reference utterances on the basis of the comparison. Sets of linear prediction coefficient parameter signals representative of the reference utterances are stored in a reference store (104). Signal conditioning circuitry (114, 124, 128, 134, 138, 140) including a controllable gain amplifier (128) converts analog signals representative of the unknown utterance into digital sample signals. The linear prediction coefficient parameter signals include sets of partial correlation (PARCOR) coefficient signals derived from the digital sample signals, and distance signals are generated which represent the dissimilarity between the derived PARCOR signals and the reference utterance PARCOR signals. An averaged distance signal representative of the relationship between the derived PARCOR signals and the PARCOR signals of the most similar reference utterance is compared with a predetermined threshold signal. If the level of the averaged distance signal is below the threshold signal level, word command signals are generated and display signals indicate the identified reference word to the operator.

./...

EP 0 074 667 A1

FIG.1

## SPEECH RECOGNITION SYSTEM

Technical Field

The invention relates to speech recognition systems and, more particularly, to speaker-dependent systems for recognizing an unknown utterance as one of a plurality of predetermined reference command utterances.


Background Art

Historically, human interfaces with machines for purposes of effecting control of the machines and/or performing operations via systems controlled by an "output" of such machines have been restricted by the requirement of at least some minimum degree of manual activity. Even with the advent of electromechanical apparatus for performance of basic machine control functions and associated processes, such manual activity has been omnipresent, though it may be limited to initiation of machine operations in those instances where continued performance requires little or no "real time" human reasoning.

Still further, as computer devices and other digital and analog processing equipment have been developed during the past several decades, manual activity has continued to be a requirement. As with less complex devices, the particular human/ machine communication interface with computer equipment is determined by operational requirements of the machine. For example, use of computer equipment for industrial control of a process may include the necessity of learning: (1) the particular programming language of the equipment, (2) the functions of various keys and keyboards, and (3) numerous other types of human/machine interfaces.

In several technological fields involving information processing, machine control and/or communication systems, it has been recognized that realizing the requisite human interface by means of voice and speech signals is substantially advantageous. Furthermore, with the recent development of microprocessor and other large-scale circuit integration technology, it has become possible to effect direct control of machines by vocal commands without requiring any substantial intermediate manipulation of switches or other mechanical or electromechanical operations.

The advantages of utilizing vocal commands to effect machine control is readily apparent. Regardless of the particular technological application in which such vocal commands are used, the most basic of these advantages is often the reduction of an operator's manual work load. Furthermore, the utilization of vocal commands also has the advantage of negating the necessity of the operator to learn programming languages, keyboard manipulations and other types of human/machine interfaces. That is, the use of vocal commands greatly simplifies the control operations since direct control is then effected by means of an operator's natural language.

During the past decade, a substantial amount of technological research has been done on the development of voice and speech recognition systems. Motivation for this development work has varied from the "pure" research often generated by the desire to understand human speech, to the "applied" research concepts for solving the various engineering problems associated with effecting machine control by means of vocal commands.

Of course, voice/speech recognition systems have many applications other than direct control of machines. For example, in the communication and business data processing fields, speech input arrangements can be utilized to record transactions, request telephone number information and various other functions. However, the basis for such applications, as well as the basis for directly controlling a machine, is the capability of permitting a human to interact with nonhuman equipment without diverting attention from other activity by requiring manual operations.

As readily apparent to any person having knowledge in the field of speech recognition systems, the engineering problems associated with such systems are substantial. Solutions to those engineering difficulties have been found in various prior art speech recognition systems whereby the basic concept of the system is to derive electrical signals (often referred to as "feature" signals) representative of input speech comprising unknown utterances, and comparing these signals to similar stored electrical signals corresponding to a "reference" set of particular speech segments or words to be recognized. If the resultant comparison of the input speech feature signals and one of the set of reference word feature signals meets predetermined recognition criteria, the input speech is accepted as a particular speech segment to be recognized. Otherwise, the unknown utterance is rejected. It is readily apparent that the reliability of such speech recognition systems is highly dependent on the prescribed means of generating the electrical signals representative of the unknown utterances, the means for comparing feature signals and the particular recognition criteria utilized for determining an acceptable comparison.

Several types of prior art speech recognition systems derive feature signals on the basis of a spectral frequency analysis of electrical signals corresponding to the unknown utterance. For example, the U.S. patent to Browning et al 4,087,680 issued May 2, 1978, describes a speaker-independent recognition system wherein time slices of analog input speech signals are analyzed for frequency content and digital samples thereof (sonograms) are generated which represent the energy contained within selected frequency bands. The samples are then processed utilizing an N-tuple pattern generation technique and the resulting pattern is compared with patterns of prestored vocabulary words.

Other types of speech recognition systems utilize a time domain analysis wherein, for example, the systems include generation of linear prediction parameter signals representative of the unknown utterances and the reference words. One such type of speech recognition system is disclosed in the United States patent to Pirz et al 4,181,821 issued January 1, 1980. The Pirz et al recognition system comprises means for recognizing an unknown utterance as one of a set of reference words and implementation of a "training" mode whereby an analysis of a plurality of utterances of each one of a set of known reference words during the training mode provides a set of reference feature signals which include linear predictive coefficients stored in a memory of the speech recognition system. Pirz et al employ a "speaker-independent" system utilizing a clustering process to overcome the problem of determining a feature signal template which will provide a high degree of recognition accuracy over a broad range of speakers.

During the training mode of the Pirz et al recognition system process, a plurality of signal templates for each reference word are generated wherein the templates correspond to various acoustic features of the word. Each template is a sequence of feature signals representative of a "cluster" of similar feature signal sets obtained from repetitive utterances of the word. The feature signal sets are stored and partitioned into groups of "similar" sets. A distance measurement between each pair of signal sets for a specific reference word is provided by clustering circuitry.

The distance signals are applied to a matrix store, and a "centermost" feature signal set is then selected as a function of a distance signal matrix element. A first "tentative" cluster of the feature signal set is chosen by comparing the distance between a set and a predetermined threshhold distance. A centermost feature signal set is then chosen from the distance signals corresponding to the feature sets of the first tentative cluster. A second tentative cluster is then formed from the group of signal sets within another threshhold distance of the centermost signal set of the first cluster.

These reiterative grouping steps are repeated until the members of the feature signal set of the current tentative cluster are equivalent to members of the previous cluster. When this occurs, the current cluster is then identified as a "permanent" cluster and the centermost feature set of the permanent cluster is identified as a template signal representative of the cluster. After the first template signal is identified, the aforedescribed clustering process is repeated for the ungrouped feature sets. Accordingly, each cluster includes all feature signal sets which have a prescribed degree of similarity determined by prediction parameter distance signals without requiring a fixed number of sets in a cluster or the averaging of distance signals.

In the recognition mode of the Pirz et al system, linear prediction parameters of an unknown utterance are applied to various circuitry. On termination of the utterance, a distance processor generates distance signals representative of similarity between each reference template signal and the feature signal sets of the unknown utterance. A predetermined number of lowest-valued distance signals are then stored and an average of these signals is determined. A reference word code which corresponds to the minimum average distance signal is then selected as corresponding to the unknown utterance.

Another type of recognition system is disclosed in the U.S. patent to Sambur 4,032,711 issued June 28, 1977. The Sambur system is a "speaker" verification and recognition system. In this system, digital speech signal frames are applied to a linear prediction coefficient (LPC) processor. The processor executes a prediction analysis of the sample speech signals utilizing conventional autocorrelation and partial correlation (PARCOR) coefficient signals.

To store feature signals of the speaker, the linear prediction parameter signals are applied to a covariance computer which produces a mean covariance matrix for the speaker utterances. The covariance matrix is a square matrix with dimensions equivalent to a pole value selected for the verification system. The covariance matrix for the entire speech sample is applied to an orthogonal parameter computer which generates a set of signals corresponding to a set of orthogonal parameters of the speech sample. These parameters provide a set of speaker-dependent but linquistically independent characteristics.

During verificiation of a current speaker, the PARCOR coefficients of the voice signals are applied to a "test orthogonal parameter generator" along with a set of reference vector signals from memory locations corresponding to the speaker against which the current speaker is to be verified. This generator produces a set of test orthogonal prediction parameters which are applied to processors for generating mean and variance signals of the orthogonal parameters across the voice sample. These signals are then compared with the mean and variance signals of the reference orthogonal parameters.

The comparison means utilized in the Sambur system comprises computation of a deviation signal which is a measure of similarity between the orthogonal parameters of the test speech and the reference speech. The comparison is "weighted" so that the orthogonal parameters which are relatively constant (i.e. small variance) over the speech samples are given greater weight. Such parameters tend to be linquistically independent and highly speaker-dependent.

As apparent from the aforedescribed patents, a substantial amount of prior art research has been performed to achieve greater accuracy in identification of "speakers" and in identification of unknown utterances as one of a set of reference words where the speaker may be any individual, i.e. a "speaker-independent" arrangement. However, many of these prior art recognition systems are utilized in applications where a recognition accuracy in the range of 80-90% may be acceptable. Unfortunately, such an accuracy range is not acceptable in many "critical" applications. For example, if a speech recognition system is to be utilized in an aircraft whereby a pilot operator effects control of certain flight control functions by means of voice commands, it is apparent that a higher degree of accuracy is required.

In part, the accuracy of a speech recognition system can be increased by utilizing "speaker dependency" whereby prestored feature signals representative of reference words are derived during a training mode from identified words previously spoken by the same individual subsequently speaking the unknown utterance. However, the "training" of a speech recognition system is often time consuming and can require a substantial number of system components additional to those necessary for identification of an unknown utterance after the feature signals of the reference words have been stored. Furthermore, speech recognition systems heretofore known in the prior art are structually unsuitable for use in high perfomance aircraft to effect control of flight functions by means of pilot voice commands and have been incapable of achieving the requisite high accuracy of command word recognition.

Summary of Invention

In accordance with the invention, a technical advance is achieved in a speaker-dependent command recognition having a high degree of recognition accuracy though operating in a severe acoustical environment. The recognition system is adapted to identify an unknown utterance spoken by an operator as one of a limited vocabulary of reference words and formulates word commands and display signals to the operator based on acceptance or rejection of the unknown utterance.

Comparator means, jointly responsive to linear prediction parameter signals representative of both the unknown utterance and each of the reference utterances , and to utterance boundary signals indicative of the beginning and end of the unknown utterance compare the parameter signals and select a reference utterance as most closely corresponding to the unknown utterance. Vocabulary utterance signals indicative of the correspondence are displayed to the operator and applied to a control system.

The recognition system further comprises input means for converting the unknown utterance spoken by the operator into sequential analog voice signals. Signal conditioning means responsive to the voice signals sample the signals at a predetermined rate and generate sample signals in correspondence therewith. Means responsive to the sample signals generate a set of linear prediction parameter signals representative of the unknown utterance. The parameter signals can include a set of partial correlation (PARCOR) coefficient signals.

Detection means responsive to the prediction parameter signals representative of the unknown utterance detect the beginning and end of the utterance and generate boundary signals in accordance therewith. Storage means are utilized to store reference signals comprising linear prediction parameter signals representative of a different utterance of the vocabulary reference utterances. The reference signals can include PARCOR coefficient signals. The comparator means is connected to the storage means and is generally responsive to the partial correlation coefficient signals representative of the unknown utterance, the reference signals and the utterance boundary signals for selecting an utterance of the vocabulary most closely corresponding to the unknown utterance.

The comparator means comprises generating means for generating sets of distance signals representative of the dissimilarity between the unknown utterance and each of the reference utterances. Means responsive to the sets of distance signals generate an average signal from a certain subset of the distance signals within each set of the distance signals.

Further in accordance with the invention, the comparator means comprises means for selecting subsets of the distance signals within each set of distance signals based on dynamic programming procedures. The average signal generating means further comprises means for generating a signal representative of the average signal value of each of the subsets of the distance signals and means for selecting as the average signal the signal with the lowest average value of the subsets of distance signals within each set of distance signals. The average signal generating means also comprises means for selecting the set of distance signals having the lowest value average signal.

In one embodiment, second comparator means are adapted for comparing the lowest value average signal with a predetermined threshold signal. Means connected to the second comparator means generates the vocabulary utterance signal most representative of the utterance of the vocabulary of reference utterances depending on whether the lowest value average utterance signal rises above or falls below the threshold signal.

The means responsive to the sample signals also comprise means for partitioning the sample signals into sequential frame signals wherein each of the frame signals includes a predetermined number of sample signals. The partitioning means also includes means for overlapping the frame signals, whereby each of the frame signals includes a second predetermined number of sample signals which are also included within a next consecutive one of the frame signals.

The linear prediction parameter signals representative of the unknown utterance include subsets of parameter signals wherein each of the subsets is representative of a different one of the frame signals. The subsets of parameter signals include a set of partial correlation coefficient signals having an order $p$ representative of the frame signals.

The utterance boundary detection means of the recognition system includes means for selecting one of the frame signals as a beginning frame signal corresponding to the beginning of the unknown utterance, and for selecting another of the frame signals as an end frame signal corresponding to the end of the unknown utterance. The utterance boundary signals include both the beginning frame signal and the end frame signal.

Each of the sets of reference signals is partitioned into subsets of reference signals wherein each subset includes a subset of partial correlation coefficient signals also having an order $p$ and representative of a different frame of a predetermined number of frames for each utterance of the limited vocabulary of reference utterances. The first comparator means is jointly responsive to the subsets of partial correlation coefficient signals representative of the first frame signals, the subsets of partial correlation coefficient signals representative of an utterance of the library of reference utterances and the beginning and end frame signals for generating a set of distance signals in accordance with a prescribed set of computations.

Also in accordance with the invention, the signal conditioning means comprises controllable attenuation means connected to the input means and responsive to a variable attenuation signal for selectively attenuating the analog voice signals. The controllable attenuation means can comprise a digital gain controllable amplifier adapted to apply gain exponent signals to the means responsive to the linear prediction parameter signals, whereby the gain exponent signals are indicative of the magnitude of the variable attenuation signal.

The signal conditioning means also comprises destination selection means connected to the input means for selectively applying the analog voice signals to other signal-conditioning circuitry. Buffer means are connected to the destination selection means for electrically isolating the analog signals and level converter means selectively adjust the magnitude of the voice signals. Anti-aliasing filter means are connected to the attenuation means for providing low-pass filtering with a linear-phase characterization of the analog voice signals, thereby preventing high-frequency noise signals from folding into low-frequency components during subsequent analog-to-digital conversion of the voice signals. Conversion means are connected to the anti-aliasing filter means for sampling the analog voice signals at a predetermined sample rate and generating sample signals in accordance therewith.

A method in accordance with the invention for identifying an unknown utterance spoken by an operator as an utterance of a limited vocabulary of predetermined reference utterances includes the steps of converting the unknown utterance into sequential analog voice signals, sampling the voice signals at a predetermined sample rate and generating sample signals in correspondence therewith. A set of linear prediction parameter signals representative of the sample signals is then generated which is representative of the unknown utterance. The linear prediction parameter signals are used to detect the beginning and end of the unknown utterance and for generating utterance boundary signals corresponding thereto. Signals comprising linear prediction coefficient signals representative of different utterances of the limited vocabulary of reference utterances are stored in a storage means and referred to as reference signals. An utterance of the vocabulary reference utterances is selected as corresponding to the unknown utterance on the basis of comparisons of the linear prediction coefficient signals representative of the unknown utterances and the reference signals. The particular linear prediction coefficient signals representative of the unknown utterances utilized for the comparison are determined in accordance with the utterance boundary signals. A signal based on the comparison is then generated.

A method further in accordance with the invention comprises the aforedescribed steps and includes the steps of generating sets of distance signals representative of the dissimilarity between the unknown utterance and different ones of the reference utterances. An average signal is then generated from a certain subset of the distance signals within each set of distance signals.

Brief Description of the Drawings

Reference will now be made to the accompanying drawings in which:

Figure 1 is a block diagram of a speech recognition system in accordance with the invention;

Figure 2 is a detailed diagram of exemplary signal conditioning circuitry of the recognition system depicted in Figure 1;

Figure 3 is a diagram symbolically illustrating the relationship between noise and vocal word commands spoken by the operator in accordance with the detection of word boundaries by the speech recognition system depicted in Figure 1;

Figure 4 is a sequence diagram illustrating an exemplary procedure for detecting the beginning of an unknown utterance in accordance with the invention;

Figure 5 is a sequence diagram illustrating an exemplary procedure for detecting the end of an unknown utterance in accordance with the invention; and

Figure 6 is a sequence diagram illustrating an exemplary procedure in accordance with the invention to compare linear prediction parameter signals representative of an unknown utterance spoken by an operator and a limited vocabulary of reference words.

<u>Disclosure of the Invention</u>

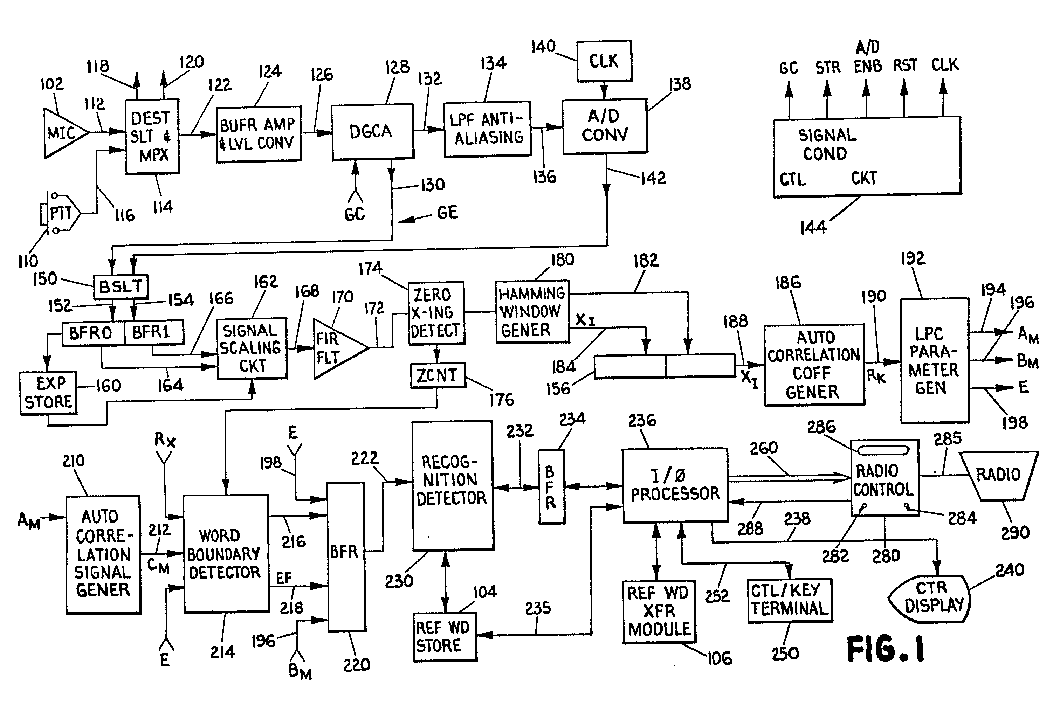

The principles of the invention are disclosed, by way of example, in a recognition system 100 as depicted in Figure 1. The basic concept of the recognition system 100 is that of an "isolated discrete utterance" recognition system whereby "unknown utterances" spoken by an operator and applied to microphone input circuitry 102 are detected in isolation and compared with a library comprising a limited vocabulary of reference utterances which are stored as representative electrical signals in reference store 104. The isolated discreet utterance can be an individual spoken word. However, in accordance with the invention, the unknown utterance can also include a set of words comprising a command sequence, i.e., a series of "connected" words. If an isolated spoken utterance is characterized as "matching" one of the library utterances, particular signals are applied to output interface transmission lines 238 and 260, the signals being indicative of identification having occurred. Although not illustrated or described in detail herein, it is apparent that the identification signal can be utilized in the same manner as any other switching signal, e.g. for purposes of controlling various types of apparatus such as within an aircraft. The utilization of the "discrete-utterance" approach in accordance with the invention provides extremely high reliability of identification. Such reliability is a necessity in, for example, an aircraft or similar environment where an erroneous identification can have severe consequences.

The recognition system 100 basically operates in two modes, namely a "training" mode where the library of reference utterances is established within store 104, and a "recognition" mode whereby unknown utterances spoken by the operator are compared to the reference utterances. It should be noted that the recognition system 100 is not speaker "independent." That is, system 100 is adapted to recognize unknown utterances spoken by a particular operator whereby the reference utterances against which the unknown utterances are compared have also been spoken by the particular operator during a training mode.

The training mode of the recognition system 100 can also be broken down into two separate modes. In one mode, the operator directly speaks into the microphone circuitry 102 so as to establish the vocabulary of reference utterances directly within store 104. However, in accordance with the invention, the established reference utterances can then be retrieved from store 104 and stored on a portable means such as reference utterance transfer module 106 depicted in Figure 1. Correspondingly, an additional means of subsequently storing the reference utterances within store 104 can then comprise the transmittal of the information from transfer module 106 directly to store 104 through I/O processor circuit 236 and transmission line 235. Accordingly, an operator need only establish a library of reference utterances corresponding to his/her voice once by direct input into the microphone system 102. Thereafter, the library of reference utterances for that particular operator can be readily retrieved from transfer module 106 and stored in store 104. The transfer module 106 can be any suitable type of portable storage means, such as a conventional magnetic tape cassette.

In the basic storage mode of operation within the training mode, the operator can initialize recognition system 100 by merely loading the previously created library of reference utterances from transfer module 106 into store 104 through processor circuit 236 and transmission line 235. Following this initialization procedure, the recognition system 100 is able to recognize the particular operator's unique speech patterns. When the actual training mode is initialized, the recognition system 100 must perform the functions of establishing a table of contents for the particular library of reference utterances, create a composite or "best example" of each library utterance from a plurality of repetitions of the utterance by the operator, and store the table of contents and library reference utterances on the transfer module 106.

The table of contents for a particular library of reference utterances can be established by either direct manual input from keyboard 250 or by transmittal of the table of contents from the transfer module 106. When the table of contents has been correctly established, it can be saved on module 106 for subsequent use. Following the establishment of the table of contents, the recognition system 100 can also create a composite of each reference utterance by interactively prompting the operator for several repetitions of the utterance . When a composite has been established, the electrical signals corresponding to the composite utterance can also be stored on the transfer module 106 for subsequent use. The particular procedures associated with storage of electrical signals in reference store 104 in correspondence to a desired vocabulary of reference utterances will be better understood after detailed description of the operation of recognition system 100 for recognizing an unknown utterance as one of the stored reference utterances.

The circuitry depicted in Figure 1 is operative both in the aforedescribed training mode to store electrical signals representative of a library comprising a limited vocabulary of reference utterances within reference store 104, and in a recognition mode for identifying an unknown utterance as one of the vocabulary of reference utterances. To best describe the operation of reference system 100, the circuitry depicted in Figure 1 will be described initially with respect to the recognition or nonrecognition of an unknown utterance of an operator subsequent to storage of reference utterances unique to the operator's speech pattern within store 104. The particular procedures for storing these reference utterances with reference to the circuitry of recognition system 100 will become apparent from such description.

The unknown utterances of the operator are spoken into the microphone circuit 102. However, to avoid detection and attempted recognition of stray noise when the operator does not desire to generate a voice command, system 100 includes a "push-to-talk" (PTT) switch 110 whereby recognition operations of the system 100 are not performed unless the PTT switch 110 is activated by the operator simultaneously with the speaking of a voice command. It should also be noted that activation of recognition operations can be accomplished by signals applied to and transmitted from I/Ø processor 23b.

When the PTT switch 110 is activated and the operator transmits a voice command into microphone circuit 102, electrical signals corresponding to the operator's voice command are transmitted on line 112 and applied to a destination selector and multiplex circuit 114. The activation signal from the PTT switch 110 is also transmitted to the selector and multiplex circuit 114 by means of transmission line 116.

The destination-selector and multiplex circuit 114 is a conventional circuit for multiplexing the input signals from microphone 102 and PTT switch 110. Further, however, circuit 114 also provides optional transmission paths 118 and 120 for the resultant multiplexed signals. Accordingly, the recognition system 100 provides a means of optionally transmitting electrical signals corresponding to the operator's voice command to circuitry other than the circuitry shown in Figure 1 for recognizing the voice command as one of a predetermined vocabulary of reference words. For example, if system 100 is utilized in an aircraft, the microphone circuit 102 can operate as both an input means for the operator's voice command and, for example, as a microphone circuit associated with a speaker system throughout the aircraft.

The particular destination of the operator's voice command can be determined by manual or other types of input to the destination selector circuit 114.

Assuming that destination selector circuit 114 has been activated in a manner so as to cause the recognition system 100 to identify the operator's voice command, the resultant multiplexed voice signal from the operator is transmitted on output transmission line 122 and applied as an input signal to the buffer amplifier and level converter circuit 124 as depicted in Figure 1. The amplifier and converter circuit 124 provides isolation of the input signal on line 122 (corresponding to the operator's voice command from the resultant output signals from circuit 124). Further, the converter circuit 124 converts the two-state electrical signal corresponding to the PTT switch 110 and the analog voice signal corresponding to the operator's voice command to appropriate signal levels for further transmittal through circuitry of recognition system 100. For example, the circuit 124 can comprise conventional and well-known transformer isolation components whereby the input impedance and signal-level range may be 600 ohms and -52 to +3 dBm, respectively.

The resultant isolated and appropriately level-converted analog output signal from circuit 124 is applied on transmission line 126 as an input signal to a digital gain-controlled amplifier 128. The controllable amplifier circuit 128 is responsive to both the level-converted analog voice signal on transmission line 126 and a gain-control signal GC applied as an input signal thereto for selectively modifying the gain of the analog input voice signal. In physically realizing the controllable gain amplifier 128, the input voice signal from line 126 is actually attenuated in accordance with the value of signal GC. The time variant attenuation is characterized as a gain exponent signal GE and is transmitted as an output signal on line 130. The detailed operation of controllable gain amplifier 128, the means of obtaining the gain-control signal GC and the resultant utilization of gain exponent signal GE are described in subsequent paragraphs herein. The gain-control signal GC can be, for example, an 8-stage signal capable of modifying gain in -6 dB increments. Further, the gain of amplifier circuit 128 is adapted to be modified in a time variant manner only when the analog voice signal from transmission line 126 is below a predetermined magnitude, thereby avoiding gain switching noise caused by transient signals. Still further, to compensate for conventional filter delay time periods, the gain exponent signal GE is generated a predetermined period of time after the gain of amplifier circuit 128 is actually modified.

The resultant attenuated analog voice signal from the controllable gain amplifier circuit 128 is generated on transmission line 132 and applied as an input signal to a low-pass anti-aliasing filter circuit 134. Filter circuit 134 is conventional in design and is utilized to prevent high-frequency noise signals from "folding over" into lower frequency signals after subsequent analog-to-digital (A/D) sampling of the voice signal is accomplished. The design of the filter circuit 134 can, for example, actually comprise three separate filter components. Specifically, a first analog filter can be of itself an anti-aliasing filter for the sharp cut-off digital filter which follows it in function. The output of this first analog filter can then be applied to a digital filter which provides the sharp frequency cut-off and then further applied to a second analog filter for removing high-frequency noise contributed by the digital filter. The composite filter circuit 134 thereby provides a sharp cut-off audio filter with a low-noise spectrum and a linear-phase characterization. The parameters of such a composite filter can be, for example, a band width having a -3 dB level at approximately 3200 Hz and a -40 dB level at approximately 4000 Hz. The phase linearity of the filter preserves the integrity of the analog voice signal, since the analog signal tends to be transient in nature.

The resultant filtered signal is transmitted on line 136 and applied as an input signal to a conventional A/D converter circuit 138. The A/D converter circuit 138 is conventional in structure and function and can be utilized to sample the analog signal at a rate determined by a clock input signal to converter circuit 138 from a conventional clock circuit 140. For example, the clock can provide a conventional square-wave strobe at 6.67 MHz, and the sample rate of the converter circuit 138 can be selected at a value of 8 kHz. Accordingly, the converter circuit 138 thereby provides a sample of the analog voice signal on transmission line 136 periodically each 124.8 microseconds. This sample signal can utilize 2,048 levels, thereby requiring a data channel having a 12-bit width (including a sign bit). This resultant sample signal is then applied as an output signal on transmission line 142 as depicted in Figure 1.

In accordance with the foregoing description, the microphone circuit 102 and PTT switch 110 can be characterized as an input means for converting an operator's voice command into electrical analog voice signals corresponding to the operator's speech pattern. Similarly, the combination of selector and multiplexer circuit 114, amplifier and converter circuit 124, controllable gain amplifier 128, anti-aliasing filter 134 and A/D converter circuit 138 with accompanying clock circuit 140 can be characterized as a signal conditioning means for converting the electrical analog voice signals into digital signals corresponding to the operator's spoken voice command. Control of functional timing of the circuitry herebefore described can be accomplished by any conventional means well known in the art of circuit design. A signal conditioning control circuit 144 is symbolically depicted in Figure 1.

as a means for providing requisite control signals for the circuitry described above. Control circuit 144 provides the gain control signal GC applied to controllable gain applifier circuit 128 to provide a time-variant attenuation signal of the analog input signal. The signal STR depicted in Figure 1 as applied from control circuit 144 provides a strobe signal to the converter circuit 138. Similarly, the A/D ENB signal is utilized to enable the converter circuit 138. The control signal CLK is merely symbolic of the output signal from clock circuit 140 which is utilized as an input clock signal to converter circuit 138. Reset signal RST provides a means for resetting clock 140 and the signal conditioning circuitry controlled thereby.

The combination of the gain exponent signals GE on transmission line 130 and the sampled voice signals generated on transmission line 142 from converter circuit 138 can be characterized in combination as "floating point" digital speech sample signals wherein the signal GE is a signal "exponent" and the sampled signal transmitted from A/D converter circuit 138 is a "fractional" component of the voice signal. Both signals can be generated at equivalent rates in synchronization and comprise composite voice signal samples.

The sequential voice signal samples from the signal conditioning circuitry are subsequently processed by other circuits within recognition system 100 in the format of speech "frames," each frame consisting of a predetermined number of consecutive speech samples. However, to obtain a high reliability with respect to identification of the operator's spoken command, and in accordance with the invention, the speech frames are overlapped so that a predetermined number of speech samples in a particular frame correspond to an equivalent number of samples in the next consecutive frame. For example, a 50% overlap between the speech frames can be utilized with each frame comprising 256 consecutive speech samples. Accordingly, the last 128 samples of a frame are also utilized as the first 128 speech samples of the next consecutive frame.

To accomplish this overlap, the speech samples from transmission lines 130 and 142 are both applied to a buffer select circuit 150. Select circuit 150 is utilized to selectively transmit the speech samples into one of two buffers BFR0 and BFR1, each comprising 128 speech sample storage locations. As the speech samples are applied to the buffers, buffer BFR0 is first filled. After BFR0 has been filled, buffer select circuit 150 is operable to transmit following speech samples to buffer BFR1. The selective transmission is symbolically depicted in Figure 1 as being accomplished over either of transmission lines 152 or 154. When both buffers have a composite of 256 speech sample signals, buffer BFR0 then transfers the first half of a 256 speech sample signal to a speech sample frame location buffer 156. After buffer BFR0 has transferred the first half of the sample signals to buffer 156, buffer BFR1 then transfers the second half of the sample signals to buffer 156. As depicted in Figure 1, the speech samples from buffers BFR0 and BFR1 are not transmitted directly to buffer 156 but are first transmitted through preprocessing circuits described hereinafter. It should be noted that other types of procedures for partitioning the voice signal samples can be utilized without departing from the basic concepts of speech recognition systems in accordance with the invention.

It is apparent from the foregoing description that additional circuitry is required for performing certain of the timing functions between the aforedescribed signal conditioning circuitry and the buffering circuitry. For example, the buffering procedure heretofore described must be initiated each time a new speech sample signal is transmitted from the converter circuit 138 and the controllable gain amplifier 128. It is therefore apparent that the means utilized to perform the buffering procedure must accomplish the procedure within a predetermined duration of time dependent upon the timing of clock circuit 140 and the corresponding application of digital speech sample signals on transmission line 142 from converter circuit 138.  Furthermore, it is also readily apparent that various means can be utilized to "point" the buffer select circuit 150 and accompanying circuitry to the required sample locations within buffers BFRO and BFR1.  That is, if the time period necessary for accomplishing the buffering procedure would exceed a certain period of time, the sample signals applied from converter circuit 138 and controllable gain applifier 128 may override sample signals within buffers BFRO and BFR1 prior to their transmittal through subsequent processing circuitry.

For reasons subsequently discussed herein, the largest valued signal of the gain exponent signals GE within either of buffers BFRO or BFRI at a particular time is "saved" within a memory location of exponent store 160.  As subsequently described herein, the signal stored in exponent store 160 is utilized during scaling procedures associated with the speech sample signals.

The speech sample signals from buffers BFRO and BFR1 are applied as input signals to signal scaling circuit 162 by means of transmission lines 164 and 166, respectively.  The necessity for scaling the speech sample signals corresponding to a frame signal is that a modification in the gain applied to controllable gain amplifier 128 by means of signal GC may have occurred during transmittal of the speech sample signals into the buffers BFRO and BFR1 corresponding to the particular frame signal.  The speech sample signals corresponding to the frame signal must therefore be adjusted to have equal scaling before further recognition processing can be performed.

An exemplary procedure for performance of the scaling by circuit 162 is to compare the attenuation exponents of each of the incoming speech samples with the largest attenuation exponent previously stored in exponent store 160. The incoming speech samples on transmission lines 164 and 166 can be "shifted" (i.e. digitally multiplied or divided by a factor of 2, 4, 8, etc.) by a value determined by the difference between the particular sample attenuation exponent and the largest attenuation exponent found in the samples of the frame signals as determined by the value of the signals stored in exponent store 160. In accordance with the foregoing, the resultant frame signal applied on output transmission line 168 therefore comprises scaled speech sample signals, each having an attenuation exponent corresponding to the largest exponent of the samples as they were applied to buffers BFR0 and BFR1.

The resultant frame signal comprising scaled speech sample signals on transmission line 168 is applied as an input signal to a "finite impulse response" (FIR) high-pass filter circuit 170. Filter circuit 170 can be, for example, a digital high-pass filter circuit which provides requisite "emphasis" of higher-frequency components of the frame signal so that such components are more substantially equivalent in magnitude to lower-frequency components. Filter circuit 170 also removes the "zero frequency" or DC component from the frame signal applied to line 168. An exemplary implementation of digital filter 170 can provide an output signal on transmission line 172 whereby the filtered output frame signal comprises individual signals having levels corresponding to the difference in levels between an input sample signal and a corresponding next-previous input sample signal. Accordingly, it is apparent that filter circuit 170 requires a means for storing the speech signal samples from the previously processed frame signal. Furthermore, a predetermined "dummy" level of incoming speech samples must be postulated in order to process the sample signals of the first frame signal.

Following pre-emphasis of the voice signal, the processed    signal is transmitted on line 172 and applied as an input signal to a Hamming window generator circuit 180. The Hamming window generator 180 provides a well-known method for performing additional low-pass filtering on the frame signal without causing the resultant output signal to be substantially constant. That is, the Hamming window provides a band pass having substantial attenuation outside of the pass band without substantially affecting the time-dependent energy representation reflecting the amplitude variations of the frame signal. The application of the Hamming window to each of the speech sample signals of the frame signal reduces time domain discontinuities at the beginning and end of the frame signals. The concept of applying a Hamming window function to electrical signals representative of speech patterns is well known in the art of speech recognition system design and a description of this concept can be found on pages 120-130 in the well-known text by Rabiner and Schafer entitled _Digital Processing of Speech Signals_, Prentice-Hall (1978).

The Hamming window can be defined as an array $W_i$ whereby _i_ is representative of the particular speech sample within a frame signal. If the frame signals are selected to comprise 256 speech sample signals, _i_ will have a range from 1 to 256. The Hamming window function values are then defined as follows:

$$w(i) = .54 - .46 * \cos (2 \pi (i-1)/255) \qquad (1)$$

Each element of the Hamming window array is multiplied by a corresponding speech sample element of the frame signal array. For purposes of subsequent description, the resultant frame signal array is shown as $X_i$ in Figure 1 and the speech sample signals therein are transmitted on lines 182 and 184 to the 256 speech sample signal location buffer 156. Transmission of these speech samples on line 182 causes the samples to be stored in the second half of buffer 156. Correspondingly, transmission of the speech samples on line 184 causes storage within the first half of buffer 156.¡ The selection of the particular half of buffer 156 in which to store the signals is made in accordance with the buffering procedure previously described herein.

The heretofore described signal scaling circuit 162, finite impulse response filter circuit 170 and Hamming window generator 180 comprise a signal preprocessing means for formatting the incoming speech sample signals into a frame signal characterized as an array $X_i$ whereby the elements of the frame signal array comprise the processed speech sample signals. The preprocessing operations as previously described format the array $X_i$ for input to linear prediction coefficient (LPC) operations whereby digital parameter signals are generated which represent prediction parameters of the speech frame signals.

The frame signals $X_i$ stored in buffer 156 are applied as input signals to auto-correlation coefficient generator 186 by means of transmission line 188. The coefficient generator 186 generates an array of well-known and conventional correlation coefficients signals $R_k$ in the format of a unitary array having $\underline{k}$ elements. The number of element signals $\underline{k}$ is also characterized as the "order" of the prediction parameter signals herein described. The auto-correlation coefficient signals $R_k$ are obtained in accordance with the following equation:

$$R(k) = \sum_{i=1}^{N-k} [X(i) * X(i+k)] \tag{2}$$

where $\underline{N}$ is the number of speech sample signals within the frame signal array, i.e. 256 in the exemplary recognition system 100 described herein in accordance with the invention.

The concept of generating signal auto-correlation coefficient signals within speech or speaker recognition arrangements is well known in the art and is described, for example, in the U.S. patent to Sambur 4,032,711 issued June 28, 1977. It is apparent to those skilled in the art that computation of the autocorrelation coefficient signals $R_k$ and other parameter signals generated as subsequently described herein can be performed by means of microprocessors or similar types of conventional computers. Accordingly, a representative Fortran computer program for such computations is illustrated in Appendix B. The auto-correlation coefficient signals $R_k$ can also be appropriately scaled to include the effects of the controlable gain amplifier attenuation, application of the Hamming window, multiplication of one scaled speech sample signal by another scaled sample signal and the previously described shift normalization of the speech samples.

The resultant auto-correlation coefficient signals $R_k$ are applied on transmission 190 as input signals to a linear prediction coefficient (LPC) parameter generator 192. The LPC parameter generator 192 computes various linear predictive coefficient signals. In the particular embodiment described herein, the coefficient signals from parameter generator 192 include partial correlation (PARCOR) coefficient signals. However, it should be emphasized that other types of linear prediction coefficient signals can be utilized in accordance with the invention.

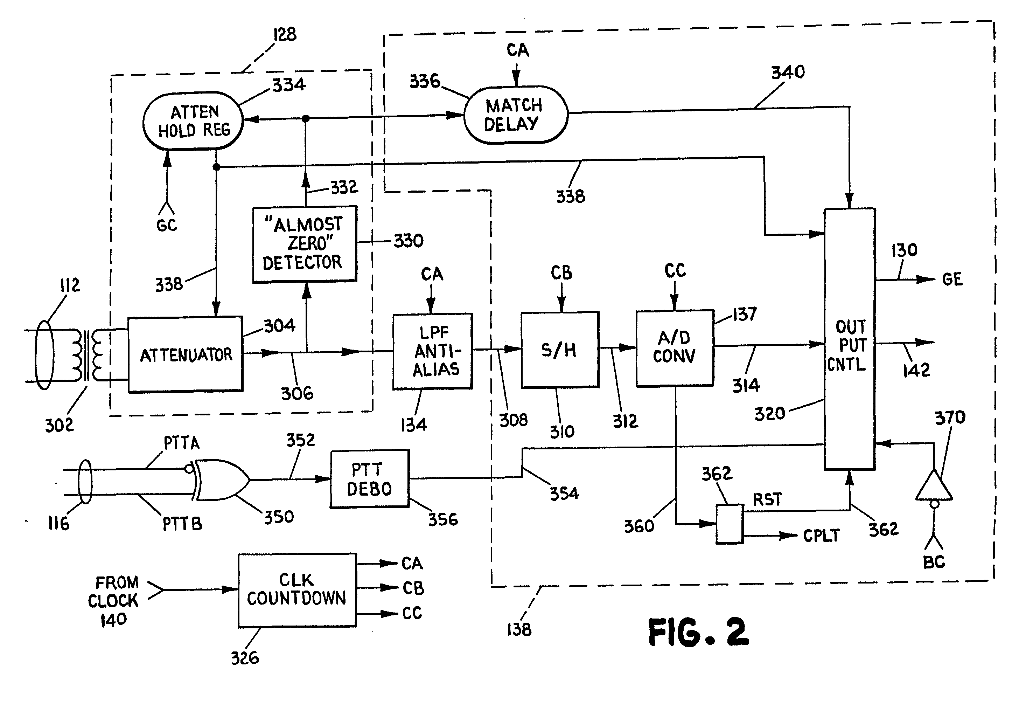

As illustrated in Figure 2, the resultant output signals from the LPC generator 192 include an array of partial correlation (PARCOR) coefficient signals $B_m$ and a predictor error signal E for each frame signal, the signals being depicted in Figure 1 as output signals transmitted on lines 196 and 198, respectively. The PARCOR coefficient signals $B_m$ comprise arrays of signals having an order m and are well known in the art of speech prediction analysis. It is apparent that digital computer means can be utilized within the parameter generator 192 to compute the linear prediction coefficient parameter signals. Accordingly, and for purposes of understanding, a representative Fortran computer program for computation of the coefficient signals is included herein as Appendix A.  It should also be emphasized that scaling adjustments can be utilized during computation of the coefficient signals, though such adjustments have been omitted from the Appendix A program for purposes of clarity and understanding.

The auto-correlation coefficient signals $R_k$, predictor error signal E and output signals from impulse response filter circuit 170 on conductor 172 are applied as input signals to boundary detection circuit 214. Detection circuit 214 is responsive to the aforedescribed input signals for statistically determining the frame signals corresponding to the beginning and end of the voice command spoken by the operator.  It should be emphasized that the recognition system 100 in accordance with the invention is an "isolated" speech recognition system whereby each utterance of the operator's voice command must be separately identified.

The concept of utterance boundary detection is well known in the art of speech recognition system design.  For example, one particular type of boundary detection circuit is described in the United States patent to Rabiner et al 4,092,493, issued May 30, 1978. A detailed description of the utterance boundary detector circuit 214 in accordance with the invention is provided in subsequent paragraphs.  However, it can be stated at this time that the boundary dection circuit 214 utilizes signals indicative of speech energy (which can correspond to the zeroth order auto-correlation coefficient signals) and predictor error to determine the boundaries between frame signals corresponding to the operator's spoken utterance .  That is, detector circuit 214 is adapted to determine the boundary between frame signals corresponding to the spoken utterances and frame signals merely comprising "noise."  The output signals of detector circuit 214 comprise a signal BF applied on transmission line 216 and a signal EF applied on transmission line 218. The signal BF comprises information indicative of the first frame signal corresponding to the beginning frame of the isolated voice command utterance. The signal EF is indicative of the frame signal corresponding to the end frame of the isolated voice command word.

Each of the signals BF and EF on transmission lines 216 and 218, respectively, is applied as an input signal to a buffer circuit 220. Also applied as signals to the buffer circuit 220 are the predictor error signal E from transmission line 198 and the partial correlation (PARCOR) coefficient signals $B_m$ from transmission line 196. Buffer circuit 220 is utilized to store the aforedescribed signals and provide a means for buffering signals generated by the previously described linear prediction coefficient circuitry and the pattern recognition circuitry to be subsequently described herein.

The aforementioned signals applied to buffer circuit 220 are thereafter applied to pattern recognition detector circuitry 230 through transmission line 222. The pattern-recognition detector circuitry 230 is adapted to compare the partial correlation coefficient array signals $B_m$ corresponding to the frame signals between beginning and end frames represented by signals BF and EF for the operator's isolated command utterance with corresponding signals representative of the library reference utterance as stored in reference word memory store 104. Each of the sets of electrical signals corresponding to each of the reference utterances is sequentially compared with equivalent signals corresponding to the isolated spoken utterance. Based on the result of the particular comparison procedure utilized, the recognition detector circuitry 230 transmits an output signal on transmission line 232 representative of either an acceptance or a rejection of the operator's spoken voice command utterance as one of the library of reference utterances stored in memory store 104. As apparent to those skilled in the art of speech recognition design, the detector circuitry 230 can also transmit other signals on line 232 representative of the particular spoken utterance.

The output signals from the recognition detection circuitry 230 are stored in a buffer circuit 234 and can then be applied to an input/output (I/O) processor circuit 236. Processor circuit 236 provides an input/ output interface for the operator, the recognition system 100 and any apparatus to be controlled in accordance with the voice command utterances spoken by the operator. The types of functions which can be performed by processor circuit 236 can include, for example, a visual display to the operator of the particular utterance of reference utterances stored in memory store 104 which the recognition system 100 has determined corresponds to the command utterance spoken by the operator. Signals corresponding to this functional display can be transmitted from processor circuit 236 on transmission line 238 to a cathode ray tube (CRT) display apparatus 240 as depicted in Figure 1. Of course, signals indicative of the recognition system 100 rejecting the spoken command utteranceas corresponding to any of the library of reference utterances can also be transmitted to the operator via display apparatus 240.

Input signals to recognition system 100, other than the spoken voice commands by the operator which are applied through microphone 102, can be applied to processor circuit 236 by means of a control/keyboard terminal 250 connected through a bidirectional transmission line 252 to the processor circuit 236. The keyboard terminal apparatus 250 can be utilized to supply any desired control commands to the recognition system 100 and can further be utilized to control storage of electrical signals representative of reference utterances in memory store 104 or storage of such reference utterances in the reference utterance transfer module 106 when the recognition system 100 is in a training mode.

The command corresponding to identification of a particular spoken command utterance can be applied to any desired apparatus through a transmission line 260.  One particular application of the recognition system 100 is use as a "voice interactive" system enabling a pilot to control aircraft avionic systems by speaking keywords instead of, for example, manually activating push-button/ toggle switches.  For example, and as depicted in Figure 1, the transmission line 260 may be connected to an aircraft radio frequency control assembly 280 which, in turn, is connected through a transmission line 285 to an aircraft radio 290.  As conventionally operated by the pilot, the radio control assembly 280 can include toggle switches 282 and 284 for manually modifying the frequency channel of aircraft radio 290.  A visual display of the present radio frequency channel can be generated in display unit 286 also included with the control assembly 280.

In conventional operation, the pilot may desire to decrease the existing channel frequency of aircraft radio 290 and toggle switch 282 may be selectively actuated to sequentially decrease the radio frequency until the desired channel is displayed on display unit 286.  Similarly, if the aircraft radio frequency is to be increased, the pilot can operate toggle switch 284, the switch 284 being operable in a manner similar to that of switch 282.

In accordance with a particular application of the invention, the radio control assembly 280 can be adapted to accept input signals through command control transmission line 260 from the I/O processor circuit 236.  If the pilot desires, for example, to modify the radio frequency to a different channel represented by a frequency "UHF 225.9", the pilot may speak such a command into the microphone circuit 102.  If the command is correctly spoken so as to be recognized by the recognition system 100, the I/O processor 236 can be adapted to apply command signals on transmission line 260 in a manner so as to adjust the frequency of aircraft radio 290 to the desired channel. Processor circuitry 236 can determine when the desired radio frequency has been achieved by means of feedback signals applied from control assembly 280 on transmission line 288. Correspondingly, the recognized voice command for changing the radio frequency can be displayed to the pilot on CRT display 240 by means of signals applied from processor circuit 236 on transmission line 238. It will be apparent to those skilled in the art of speech recognition system design and avionics systems that numerous other specific applications of voice commands can be utilized for pilot functions associated with an aircraft. For example, voice commands can be utilized for modifying aircraft headings and similar functions where manual operations by the pilot have heretofore directly or indirectly generated particular electrical signals for performance of the avionic functions. It will also be apparent to those skilled in the art of control system design that the command sequence signals on line 260 can be applied to numerous other types of apparatus to control the operations thereof.

A more detailed block diagram of the signal conditioning circuitry previously described with respect to Figure 1 is depicted in Figure 2. As illustrated therein, the analog input signal on transmission line 112 from microphone circuitry 102 previously described with respect to Figure 1 is applied through an isolation transformer 302 to a controlled gain attenuator circuit 304. The attenuator circuit 304 can be an eight-state gain control attenuator wherein the resultant attenuator signal is applied on transmission line 306 to the low-pass anti-aliasing filter circuit 134 previously described with respect to Figure 1. The filtered output signal from circuit 134 is applied on transmission line 308 to a "sample-and-hold" circuit 310 which applies a desired sampled speech signal to line 312 as an input signal to A/D converter circuit 137.

The resultant digital speech signal is thereafter applied on transmission line 314 to an output control circuit 320.

The clocking signal from clock 140 described with respect to Figure 1 is applied through a clock countdown circuit 326 having three clock output signals of separate frequencies and labeled clock signals CA, CB and CC in Figure 2. These clock signals are selectively applied to the antialiasing filter circuit 134, sample-and-hold circuit 310 and A/D converter circuit 137 to correctly time the functions performed thereby.

The attenuated speech signal on transmission line 306 is also applied to an "almost-zero" detector circuit 330 which is utilized to insure that the attenuator state of circuit 304 is not modified when the analog voice signal is above a predetermined magnitude. This detection arrangement avoids attenuation-switching noise which may be caused by transient signals associated with high-amplitude voice signals. The output of detector circuit 330 is applied on a transmission line 332 as input signals to an attenuation hold register 334 and a matching delay circuit 336. The attenuation hold register 334 is responsive to the gain control signal GC previously described with respect to Figure 1 and the output signal from detector circuit 330 on line 332 to apply an attenuation state signal on line 338 to attenuator circuit 304 only when the analog voice signal is below a predetermined magnitude.

The matching delay circuit 336 is clocked by clock signal CA and is utilized to apply a delay signal on transmission line 340 to the control circuit 320 so as to compensate for delay time associated with the various filtering and A/D converter circuitry previously described. The output signal of attenuation hold register circuit 334 applied to transmission line 338 is also utilized as an input signal to the output control circuit 320 so as to provide the previously described gain exponent signal GE on transmission line 130.

The "push-to-talk" signal applied from PTT switch 110 described with respect to Figure 1 is transmitted on line 116 as separate signals PTTA and PTTB through a relay circuit 350 which provides a resultant activation signal on transmission line 352. This activation signal is applied to the control circuit 320 on transmission line 354 after being applied through a signal "debounce" circuit 356 so as to prohibit any transient signals from occurring due to bouncing of various mechanical relays and switches.

The A/D converter circuit 137 is also utilized to apply enable and disable signals on transmission line 360 to an enable/ disable circuit 362. Circuit 362 is utilized to apply a reset signal RST to the output control circuit 320 through transmission line 362. Further, circuit 362 supplies a "completion" signal CPLT to the buffering control circuitry of recognition system 100 previously described with respect to Figure 1. Control of the output signals from output control circuit 320 is also partially accomplished through a bus-control signal BC applied through inverter circuit 370 to the control circuit 320.

As previously described with respect to Figure 1, the utterance boundary detector circuitry 214 provides determinations of beginning and end frame signals corresponding to the statistical beginning and end of the operator's command utterance. One exemplary embodiment of a boundary detection procedure in accordance with the invention utilizes certain parameters of the speech signal samples to determine the boundary between frame signals comprising "noise" and those frame signals corresponding to an operator's actual command utterance. Because of the varying characteristics of noise within frames having an absence of a speech pattern, the detection procedure must determine in advance how the noise changes in order to enable more optimal detection. One approach is to therefore compute statistics of the noise frames utilizing the "silence" region existing before each spoken command utterance. However, undesirable features may still exist since noise statistics may not be substantially accurate because of only a limited silence region between command utterances, sudden modification in noise power, and variance of noise characteristics at different periods of time.

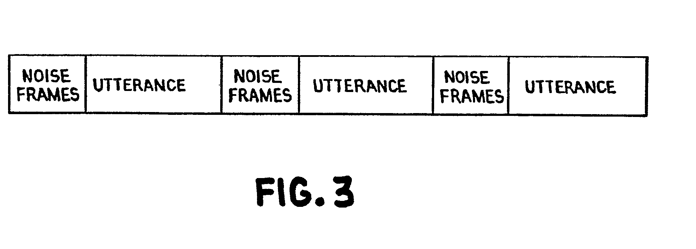

However, in accordance with the invention, a procedure for detecting frame signals corresponding to the beginning and end of spoken command utterances substantially overcomes these difficulties. This procedure first assumes that a predetermined number of noise frames are available immediately prior to each spoken command utterance. A symbolic diagram depicting this assumption is illustrated in Figure 3. Certain statistical parameter signals are then computed for various features of the frame signals corresponding to noise frames and the frame signals corresponding to the spoken command utterance. The following paragraphs describe in detail a particular procedure which can be utilized in accordance with the foregoing to detect beginning and end frame signals.

Assuming that a particular desired feature is represented by the symbol Y, the mean value of this feature is symbolically depicted as $\overline{Y}^m$ and the "mean absolute deviation" (MAD) is symbolically depicted as $\sigma_y^m$. The superscript index defines the mean or the mean absolute deviation at the mth command word. Accordingly, the mean and mean absolute deviation of the first word are computed as follows with respect to the computation of noise statistics corresponding to the first word:

$$\overline{Y}^1 = \frac{1}{F} \sum_{i=1}^{F} Y_i \tag{3}$$

$$\sigma_y^1 = \frac{1}{F} \sum_{i=1}^{F} | Y_i - \overline{Y}^1 | \tag{4}$$

where $\underline{F}$ corresponds to the number of frame signals assumed to be noise frames available prior to each spoken command word. For example, $\underline{F}$ may be equal to 8 and the following equations will be described accordingly.

The predetermined number of noise frame signals are accumulated for each succeeding word command. For the next three words, the mean and mean absolute deviation statistical characteristics of the noise frames are computed as follows:

$$\overline{Y}^{\ell+1} = \frac{8\ell\overline{Y}^1 + \sum\limits_{i=1}^{8} Y_i + 8\ell}{8\ell + 8} \tag{5}$$

$$\sigma_y^{\ell+1} = \frac{8\ell\sigma_y^\ell + \sum\limits_{i=1}^{8} \left| Y_{i+8\ell} - \overline{Y}^{\ell+1} \right|}{8\ell + 8} \tag{6}$$

where $l = 1, 2$ and $3$. To obtain a representation within the noise statistics reflecting possible modification in noise power, the noise statistics following the fourth word are computed differently. That is, they are computed as follows:

$$\overline{Y}^{\ell+k} = \frac{16\overline{Y}^\ell + \sum\limits_{i=1}^{8k} Y_{i=8\ell}}{16 + 8k} \qquad \begin{array}{l} k = 1, 2 \\ \ell = 4,6,8,10 \end{array} \tag{7}$$

$$\sigma_y^{\ell+k} = \frac{16\sigma_y^\ell + \sum\limits_{k=1}^{2}\sum\limits_{i=1}^{8} \left| Y_{i+8(\ell+k-1)} - \overline{Y}^{\ell+k} \right|}{16 + 8k} \tag{8}$$

The feature signals of the speech sample signals which can be utilized for word boundary detection in accordance with the invention can comprise speech energy and other types of feature characteristics. Speech energy can be defined as the zeroth order auto-correlation signal for each frame signal. Correspondingly, a "noise LPC prediction error" signal can be computed in accordance with the following equation:

$$S_n = R_o E_d \tag{9}$$

where $R_o$ is the zeroth order auto-correlation signal and $E_d$ the normalized LPC prediction error signal. The statistics of speech energy and LPC prediction error characteristic signals can be computed directly using the aforedescribed equations 3-8 with the substitution of the variable Y by the desired feature characteristic signal.

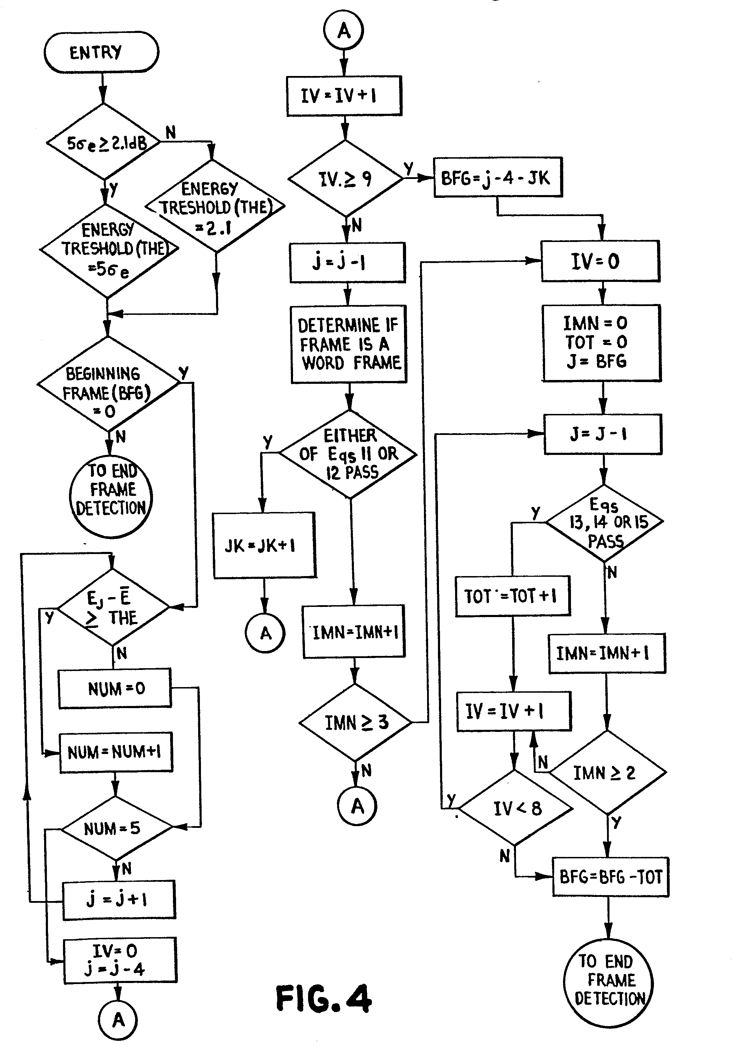

After completing computation of noise statistics for the current spoken command word, beginning frame signal detection can be initiated by computing the speech energy and other statistical paramater signals for successive frame signals and comparing these characteristics with average values of corresponding characteristics for the assumed noise frames. A set of "similarity" signals can then be derived in any desired manner to correlate the similarity between unknown frame signals and assumed noise frame signals. These similarity signals can then be compared with average values of the noise LPC prediction error signals computed in accordance with Equation 9. A detailed sequence diagram of the beginning frame detection operations is illustrated in Figure 4.

As illustrated in Figure 4, in order to prevent detection of a sudden "jump" of noise energy, a spoken command word can be characterized as being detected only after detection of five continuous frame signals having energy greater than that of the noise by the larger of predetermined statistical values. For example, the detection circuitry can be arranged so that five continuous frame signals with energy greater than that of noise frame signals by the larger of 5 and 2.1 dB are required, where $\sigma_e$ is the mean absolute deviation of the frame signal energy.

When a beginning frame signal is "roughly" determined in accordance with the aforedescribed procedure, a more accurate beginning frame signal can be computed by examining frame signals in a reverse manner. During this procedure, each frame signal is checked to determine whether it is a possible word frame or a noise frame signal. This reverse examination procedure can include more "severe" comparison thresholds between statistical parameters of assumed noise and speech frames.  For example, assume $E_j$, $\bar{E}$ and $\sigma_e$ represent jth frame average energy, average noise energy and noise energy mean absolute deviation.  A frame signal j can then be characterized as a possible beginning word frame signal whenever either of the following computations is true:

$$E_j - \bar{E} \geq 2\, \sigma_e \qquad \underline{or} \qquad (10)$$

$$\frac{E_j - \bar{E}}{\sigma_e} \geq 5 \qquad (11)$$

If both of the above conditions fail, the frame j is characterized as a noise frame signal.  A conventional counter storage location can be utilized to accumulate the number of possible word frame signals during the reverse examination process.  In accordance with this procedure, if a predetermined maximum number of frames have been examined or a lesser predetermined maximum number of noise frame signals are detected, an initial beginning frame signal is computed as the current frame signal.

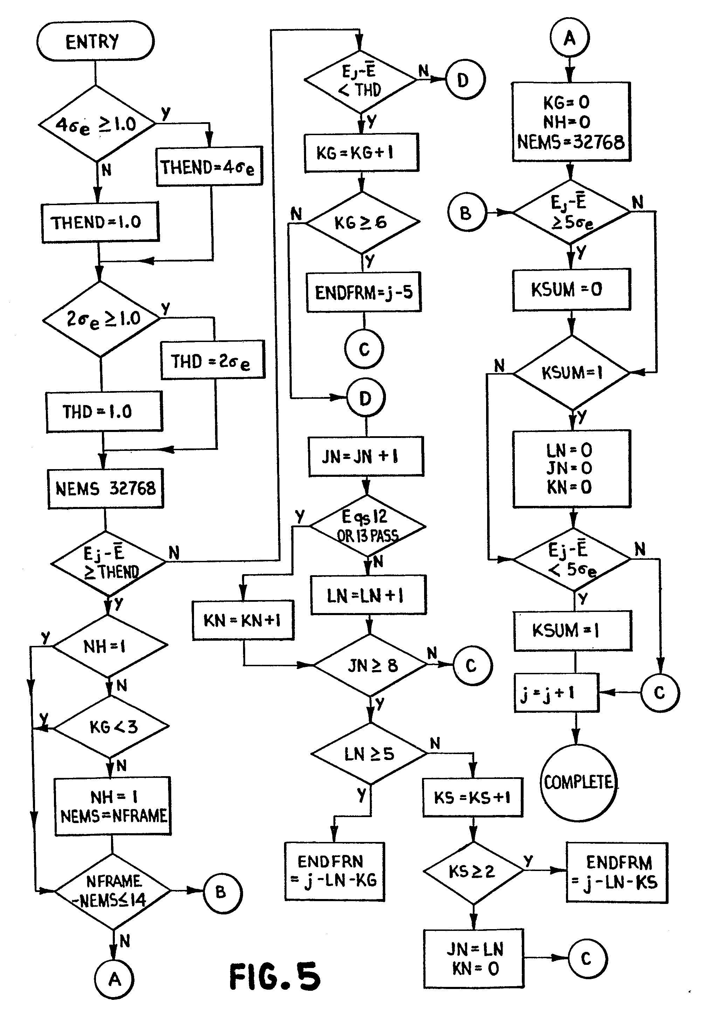

Following determination of a beginning frame signal corresponding to the beginning of the spoken command utterance, the detection circuitry 214 can then be utilized to obtain an "end" frame signal for the command utterance.  A sequence diagram illustrating in detail an exemplary procedure for detecting an end word frame signal in accordance with the invention is illustrated in Figure 5.  Upon initiation of the end frame signal detection procedure, two individual threshhold signals are determined.  An upper threshhold signal, characterized as THEND, can be the larger of $4\, \sigma_e$ and 1.0 dB.  The lower threshhold signal, defined as THD, can be the larger of $2\, \sigma_e$ and 1.0 dB.  For purposes of characterizing the frame signals, a frame is defined as a "weak" utterance frame signal if $E_j$ minus $\bar{E}$ is smaller than THEND.  Again, a counter memory location can be utilized to accumulate the number of weak frame signals such that $E_j$ minus $\bar{E}$ is less than or equal to THD. In accordance with an exemplary embodiment, if the counter value is greater than or equal to 6, the end of the vocal command utterance is characterized as having been detected. Accordingly, the end frame signal is detected regardless of the existence of a noise power "jump" or possible inaccurate noise statistical signals.

However, before the end of an utterance is characterized by a particular frame signal, each weak utterance frame signal is further checked to determined if it should be included as an utterance frame signal. One means of accomplishing this procedure is to include a weak utterance frame signal as part of the spoken command utterance if any of the following conditions is achieved:

$$E_j - \bar{E} \geq 2\sigma_e \qquad \underline{or} \qquad (12)$$

$$\frac{E_j - \bar{E}}{\sigma_e} \geq 5 \qquad (13)$$

As depicted in the illustrative sequence diagram of Figure 5, three separate counter memory locations JN, LN and KN can be utilized for detecting the end frame signal. Whenever either one of the conditions set forth in Equations 12 or 13 is satisfied, KN can be incremented by one, otherwise LN is incremented by one. The counter JN is characterized as the number of weak frame signals checked and is the sum of the counters LN and KN. If at any point, five out of eight continuous weak frame signals are determined to be noise frames, the frame signal corresponding to the end of the spoken command utterance is characterized as being detected. Otherwise the procedure is continued. However, the procedure is repeated only two times in order to minimize any effect of nonstationary noise power or inaccurate noise statistics.

If the computation of $E_j$ minus $\bar{E}$ is

greater than THEND, the utterance frame is characterized as a "strong" utterance frame. If the counter value used to accumulate the number of weak utterance frames is greater than or equal to three, the frame number corresponding to the strong utterance frame signal is saved in a separate buffer. If no end utterance frame signal is detected, for example, 15 frame signals after the stored frame signal, then the counter used to accumulate the number of frame signals is reset to zero. In such a case, these frame signals are characterized as merely "stops" within the speech pattern. Additionally, if it is detected that $E_j$ minus $\bar{E}$ is greater than or equal to $5\sigma_e$, then all of counters LN, JN and KN are also set to zero. Correspondingly, if $4\sigma_e$ is less than or equal to $E_j$ minus $\bar{E}$ less than or equal to $5\sigma_e$, then the counters LN, JN and KN are reset only once. This particular resetting procedure is utilized to prevent the inclusion of additional noise frame signals merely due to nonstationary noise.

It should be emphasized that other types of utterance boundary detection sequences can be utilized in accordance with the basic features of the invention. For example, one type of detection procedure which may be advantageous in high noise environments and/or with a pilot's use of oxygen mask equipment involves the detection of speech by characterization of frame signals as corresponding to noise, voiced or unvoiced regions of the voice command. As well known to those skilled in the art of speech recognition systems, voiced speech corresponds to utterances produced by vocal chord vibrations.

A detection procedure in accordance with the foregoing can include filtering and more rapid sampling of the speech frame signals, in combination with computation of autocorrelation signals of the sampled signals. The autocorrelation signals and statistical parameter signals of the sampled signals can be utilized to characterize the frame signals as noise, voiced or unvoiced speech regions. Subsequent to characterization of the frame signals, a predetermined process for detecting beginning and end frame signals based on the speech region characterizations can be utilized.

In accordance with the foregoing descriptions, signals BF and EF on transmission lines 216 and 218 as illustrated in Figure 1 correspond to identification numbers of the frame signals characterized as the beginning and end, respectively, of the spoken command word. However, still other detection procedures can also be utilized in accordance with the invention. For example, it may be advantageous to include within the detection procedure a characterization of a "minimum" or a "maximum" constraint on the number of frame signals possible within any particular command utterance. That is, any detected command utterance having a frame signal length outside of the bounds of such limits is rejected by the recognition system 100. It should also be noted that the actual number of noise frames which will exist between any particular command utterances will in part be determined by the operator's tendency to activate the PTT switch 110 described with respect to Figure 1 either immediately upon the speaking of command utterances into the microphone circuit 102, or the tendency for the operator to activate the PTT switch 110 at a time substantially prior to the speaking of command utterances.

As also described with respect to Figure 1, the pattern recognition detector circuitry 230 operates to compare the spoken command utterance with each of the limited vocabulary of reference utterances stored in reference store 104. Various types of comparison procedures and acceptance/ rejection threshhold determinations have been set forth in prior art recognition systems. In accordance with the invention, the pattern recognition detector circuitry 230 of recognition system 100 utilizes a procedure whereby an optimum measure of "similarity" is determined between the parameter signals corresponding to the vocal command word and the parameter signals of the reference words as stored in reference word store 104. Specifically, the detector circuitry 230 utilizes the arrays of the linear predictive parameter signals for the frame signals corresponding to the spoken command utterance as determined by the beginning and end frame signals of the utterance represented by signals BF and EF described with respect to Figure 1. In the particular embodiment described herein, the linear predictive parameter signals include PARCOR coefficient signals.

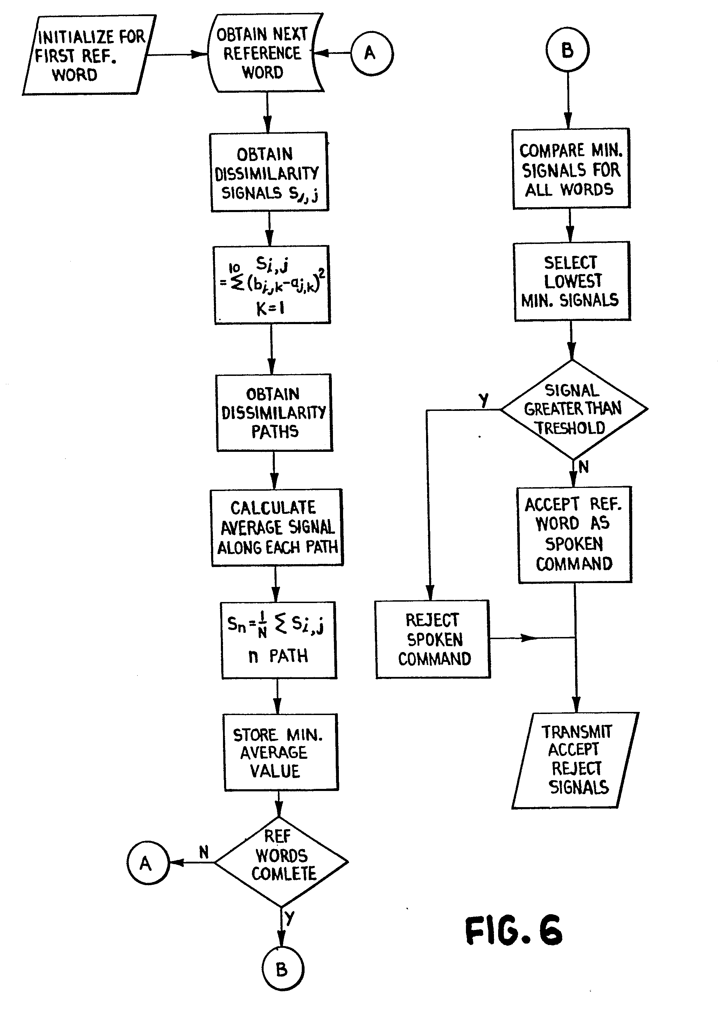

The basis for making the comparison in the pattern recognition detector circuitry 230 is to compare the similarity between speech signals in each ith frame signal of the spoken command utterance with the speech signals in the jth frame of each of the reference utterances stored in the reference word store 104. A sequence diagram illustrating an exemplary procedure is depicted in Figure 6. Such a measure of "dissimilarity" can be defined in accordance with the following equation utilizing an exemplary order of 10 for the partial correlation coefficient signals:

$$S_{i,j} = \sum_{k=1}^{10} (b_{i,k} - a_{j,k})^2 \qquad (14)$$

where $b_{i,k}$ is a kth partial correlation coefficient signal associated with the ith frame of the vocal command utterance and $a_{j,k}$ is a kth partial correlation coefficient associated with the jth frame of the particular reference utterance being compared. It is apparent that the distance signals $S_{i,j}$ can be characterized as a matrix set of dissimilarity comparisons between the frame signals.

One particular means in accordance with the invention for comparing the vocal command utterance to the reference utterances is to then determine a minimum dissimilarity "path" through the matrix of the distance signals $S_{i,j}$. An overall measure of dissimilarity $S_n$ along the nth path can be defined as the average of all distance signals encountered along the path in accordance with the following equation:

$$S_n = \frac{1}{N} \sum_{\text{nth path}} S_{i,j} \qquad (15)$$

The allowable range of utterance boundary errors as well as reasonable maximum and minimum values for instantaneous time scaling differences between the compared command words will limit the actual allowable paths to be measured.

The overall measure of dissimilarity $S_n$ (i.e., an average distance signal) along each of the n paths can then be compared with the average distance signals of other paths to determine the overall dissimilarity between the compared words. It should be emphasized that the compared utterances need not have equivalent numbers of frame signals. Furthermore, the particular procedure for comparing these utterances in accordance with the foregoing description substantially minimizes the effects of utterance boundary errors and time-warping characteristics.

Following a determination of the overall dissimilarity between the spoken command utterance and the reference utterances within memory store 104, the average distance signal having the minimum value among all signals is characterized as corresponding to the "most possible" reference utterance to which the unknown vocal utterance corresponds. Following this comparison procedure, the minimum overall dissimilarity signal can be compared to a predetermined rejection/ acceptance threshold signal defining the value of the dissimilarity signal whereby if the dissimilarity signal has a value greater than the threshold signal, the vocal command utterance is rejected. Correspondingly, if the minimum dissimilarity signal is less than the threshold signal value, the vocal command utterance is accepted as a particular reference word.

As previously described with respect to Figure 1, signals defining acceptance or rejection of the vocal command utterance as corresponding to a particular reference utterance can be applied to transmission line 232 illustrated in Figure 1. Additional signals can also be transmitted on transmission line 232 to processor circuit 236 defining the particular reference utterance to which the vocal command utterance has been identified as corresponding thereto. Various types of comparison threshold signals can be utilized in accordance with invention. For example, the particular threshold signal may be computed on the basis of statistics of incoming speech signals or it may be a constant signal determined prior to operation of the recognition system 100.

It should be noted that the various details of the system 100 described herein as an exemplary embodiment of a speech recognition system in accordance with the invention are not meant to be exhaustive. It will be apparent to those skilled in the art of speech recognition system design that other modifications and variations of the above-described illustrative embodiments of the invention can be effected without departing from the spirit and scope of the novel concepts of the invention.

## APPENDIX A

### GENERATE PREDICTOR ERROR SIGNALS, PREDICTOR AND PARCOR COEFFICIENT SIGNALS

```
B(1) = R(1) / R(0)
A(10 = B(1)
E = R(O) - R(1) * B(1)

DO 30 K=2,M

      SUM = O
      DO 10 L=1,K-1
           C(L) = A(L)
           SUM = SUM + A(L) * R(K-L)
10    CONTINUE

      TEMP = R(K) - SUM
      B(K) = TEMP / E
      E = E - B(K) * TEMP

      A(K) = B(K)
      DO 20 L=1,K-1
           A(L) = C(L) - B(K) * C(K-L)
20    CONTINUE

30 CONTINUE
```

## APPENDIX B

### GENERATE AUTOCORRELATION SIGNALS

```
      RO = 0

      DO = 10 K=1,N
           RO = X(K) * X(K) + RO

10 CONTINUE

      DO 30 K=1,M
           R(K) = 0

      DO 20 L=1, N-K
           R(K) = X(L) * X(K+L) + R(K)

20 CONTINUE
30 CONTINUE
```

## Claims

The embodiments of the invention in which an exclusive property or privilege is claimed are defined as follows:

1. A speaker-dependent command recognition system (100) for identifying, though operating in a severe acoustical environment, unknown utterances spoken by an operator as one of a limited vocabulary of reference utterances, and adapted to formulate a command sequence therefrom, the recognition system comprising:

input means (102, 110) for converting said unknown utterances spoken by said operator into sequential analog voice signals;

signal conditioning means (114, 124, 128, 134, 138) responsive to said analog voice signals for sampling said voice signals at a predetermined sample rate and generating sample signals corresponding thereto;

means (150, 162, 174, 180, 186, 192) responsive to said sample signals for generating a set of linear prediction parameter signals representative of said unknown utterances, wherein said set of linear prediction parameter signals includes a set of partial correlation coefficient signals representative of said unknown utterances;

boundary detection means (214) responsive to said linear prediction parameter signals for detecting the beginning and end of said unknown utterances and for generating utterance boundary signals corresponding thereto;

storage means (104) for storing sets of reference signals, each set of said reference signals comprising partial correlation coefficient signals representative of a different utterance of said limited vocabulary of reference utterances;

first comparator means (230) connected to said storage means and jointly responsive to said partial correlation coefficient signals representative of said unknown utterances, said reference signals and said utterance boundary signals for selecting an utterance of said vocabulary of reference utterances as corresponding to said unknown utterances on the basis of comparisons of said set of partial correlation coefficient signals representative of said unknown utterances with each of said sets of reference signals, and, based on said comparison, representative of said word of said vocabulary of reference utterances for generating a vocabulary utterance signal; and

means (236, 250) responsive to said vocabulary word signal for indicating the selection of said utterance to said operator.

2.    A speaker-dependent command recognition system (100) in accordance with claim 1 wherein said first comparator means (230) further comprises:

generating means (230) for generating sets of distance signals representative of the dissimilarity between said unknown utterances and each of said reference utterances; and

means (230) responsive to said set of distance signals for generating an average signal from a certain subset of said distance signals within each set of said distance signals, said average signal having a value corresponding to an average value of the distance signals in said certain subset of said distance signals.

~~3.    A speaker-dependent command recognition~~ system (100) in accordance with claim 2 wherein said first comparator means (230) further comprises means (230) for selecting subsets of said distance signals within each set of distance signals based on dynamic ~~programming~~.

3.    A speaker-dependent command recognition system (100) in accordance with claim 2 wherein the average signal generating means (230) further comprises:

means (230) for generating a signal representative of the average signal value of each of said subsets of said distance signals; and

means (230) for selecting as said average signals the signal with the lowest average value of said subsets of distance signals within each set of distance signals.

4. A speaker-dependent command recognition system (100) according to claim 2 or 3 , wherein the average signal generating means (230) further comprises means (230) for selecting the set of distance signals having the lowest value average signal.

~~6. A speaker-dependent command recognition system (100) according to claim 5, wherein said first comparator means (230) further comprises:~~

~~second comparator means (230) connected to said average signal generating means (230) for comparing the lowest value average signal with a predetermined threshold signal; and~~

~~means (236) connected to said second comparator means for generating said vocabulary utterance signal depending on whether said lowest value average utterance signal rises above or falls below said threshold signal.~~

5. A speaker-dependent command recognition system (100) according to claim 1 wherein said first comparator means (230) further comprises:

second comparator means (230) responsive to a lowest of said average signals for comparing said lowest average signal with a predetermined threshold signal; and

means (236) connected to said second comparator means for generating said vocabulary utterance signal depending on whether said lowest average signal rises above or falls below said threshold signal.

~~6. A speaker-dependent command recognition~~
system (100) according to claim 7 and further comprising
means (240) connected to said ~~second~~ comparator means
for indicating to an operator the failure of said
lowest average signal to fall below the level of said
~~threshold signal.~~

6. A speaker-dependent command recognition
system (100) in accordance with claim 1, wherein said
means (150, 162, 174, 180, 186, 192) responsive to said
sample signals comprises means (150) for partitioning
said sample signals into sequential frame signals
wherein each of said frame signals includes a first
predetermined number of said sample signals.

7. A speaker-dependent command recognition
system (100) in accordance with claim 6, wherein said
means (150) for partitioning said sample signals into
said frame signals comprises means (BFRO, BFRI) for
overlapping said frame signals, whereby each of said
frame signals includes a second predetermined number of
said sample signals also included within a next consecutive one of said frame signals.

8. A speaker-dependent command recognition
system (100) in accordance with claim 6, wherein said
set of linear prediction parameter signals includes
subsets of said linear prediction parameter signals so
that each of said subsets of linear prediction parameter
signals is representative of a different one of said
frame signals.

9. A speaker-dependent command recognition
system (100) in accordance with claim 8, wherein each
of said subsets of linear prediction parameter signals
includes a subset of partial correlation coefficient
signals having an order $p$ representative of said frame
signals.

10. A speaker-dependent command recognition system (100) in accordance with claim 9, wherein said boundary detection means comprises means (214) for selecting one of said frame signals as a beginning frame signal corresponding to the beginning of said unknown utterances, and for selecting another one of said frame signals as an end frame signal corresponding to the end of said unknown utterances, whereby said utterance boundary signals include said beginning frame signal and said end frame signal.

11. A speaker-dependent command recognition system (100) in accordance with claim 10, wherein each of said sets of said reference signals are partitioned into subsets of said reference signals and each of said subsets of reference signals includes a subset of partial correlation coefficient signals having an order $p$ representative of a different frame of a predetermined number of frames for each word of said limited vocabulary of reference utterances.

12. A speaker-dependent command recognition system (100) in accordance with claim 11, wherein said first comparator means is jointly responsive to said subsets of partial correlation coefficient signals representative of said first frame signals, said subsets of partial correlation coefficient signals representative of a word of said library of reference utterances, and said beginning and end frame signals for generating a set of distance signals

$$S_{i,j} = \sum_{k=1}^{N} (b_{i,k} - a_{j,k})^2$$

where $b_{i,k}$ is the kth partial correlation coefficient signal representative of the ith frame of said first frame signals, and $a_{j,k}$ is the kth partial correlation coefficient signal of the jth frame of said word of said library of reference utterances.

13. A speaker-dependent command recognition system (100) for identifying, though operating in a severe acoustical environment, unknown utterances spoken by an operator as one of a limited vocabulary of reference utterances, and adapted to formulate a command sequence therefrom, the recognition system comprising:

input means (102, 110) for converting said unknown utterances spoken by said operator into sequential analog voice signals;

signal conditioning means (114, 124, 128, 134, 138) responsive to said analog voice signals for sampling said voice signals at a predetermined sample rate and for generating sample signals correponding thereto;

means (150, 162, 174, 180, 186, 192) responsive to said sample signals for generating a set of linear prediction parameter signals representative of said unknown utterances;

means (210, 214) responsive to said linear prediction parameter signals for detecting the beginning and end of said unknown utterances and for generating utterance boundary signals corresponding thereto;

storage means (104) for storing sets of reference signals, each set of said reference signals comprising linear prediction parameter signals representative of a different utterance of said limited vocabulary of reference utterances;

selector means (230) connected to said storage means and jointly responsive to said set of linear prediction parameter signals representative of said unknown utterances, said reference signals and said utterance boundary signals for selecting an utterance of said vocabulary of reference utterances as corresponding to said unknown utterance and for generating an utterance vocabulary signal responsive thereto, said selector means (230) comprising:

distance signals representative of the dissimilarity between said set of linear prediction parameter signals of said unknown utterances and each of said sets of reference signals;

means (230) responsive to said sets of distance signals for generating an average signal from a certain subset of said distance signals within each set of said distance signals; and

means (230) responsive to said average signals for selecting the average signal with the lowest average value of said subsets of distance signals within each set of distance signals, said lowest average value signal thus selected being representative of the best match between said unknown utterance and an utterance of said limited vocabulary of reference utterances; and

means (236, 240) responsive to said word vocabulary signal for indicating the selection of said utterance to said operator.

17. A speaker-dependent command recognition system (100) in accordance with claim 16 characterized in that said unknown utterances comprise a current utterance and a next prior utterance, and said signal conditioning means (114, 124, 128, 134, 138) and said means (150, 162, 174, 180, 186, 192) responsive to said sample signals operate on signals representative of said current utterance during a period of time when said selector means operate on said next prior utterance, and said means (230) responsive to said utterance vocabulary signal indicates the selection of said utterance corresponding to said next prior utterance during said period of time.

18. A speaker-dependent command recognition system (100) according to claim 16 wherein said average signal generating means (230) further comprises:

means (230) for generating a signal representative of the average signal value of each of a number of subsets of said distance signals in each set of distance signals; and

-52-

0074667

~~means (230) for selecting the lowest average,~~
signal value of each of said subsets of said distance
signals as said average signal of said distance signals
within each set of said distance signals.

19.  A speaker-dependent command recognition
system (100) according to claim 18 wherein said selector
means (230) further comprises means (230) for selecting
said subsets of said distance signals based on dynamic
programming.

20.  A speaker-dependent command recognition
system (100) according to claims 16 or 19 wherein said
selector means (230) further comprises:
comparator means (230) for comparing said
lowest value average signal with a predetermined thres-
hold signal;
means (236, 240) connected to said comparator
means for generating said vocabulary utterance signal
in the event that said lowest value average signal is
less than said predetermined threshold signal.

21.  A speaker-dependent command recognition
system (100) according to claim 20 and further comprising
means (240) connected to said comparator means for
indicating to said operator the failure of said lowest
value average signal to fall below said threshold
~~signal.~~

14.  A speaker-dependent command recognition
system (100) in accordance with claim 13, wherein said
signal conditioning means (114, 124, 128, 134, 138)
comprises controllable attenuation means (128) connected
to said input means (102, 110) and responsive to a
variable attentuation signal for selectively attenuating
said analog voice signals.

15.  A speaker-dependent command recognition system (100) in accordance with claim 22, wherein said controllable attenuation means comprises a digital gain controllable amplifier (128) adapted to apply to said means (114, 124, 128, 134, 138) responsive to said linear prediction parameter signals gain exponent signals indicative of the magnitude of said variable attenuation signal.

16. A speaker-dependent command recognition system (100) in accordance with claim 1 or claim 13, wherein said signal conditioning means (114, 124, 128, 134, 138) comprises:

destination selection means (114) connected to said input means (102, 110) for selectively applying said analog voice signals to other circuitry of said signal conditioning means;

buffer means (124) connected to said destination selection means (114) for electrically isolating said analog voice signals;

level converter means (124) for selectively adjusting the level of said analog voice signals;

controllable attenuation means (128) connected to said buffer means (124) for selectively attenuating said analog voice signals;

anti-aliasing filter means (134) connected to said controllable attenuation means (128) for providing low-pass filtering with a linear-phase characterization of said analog voice signals, thereby preventing high-frequency noise signals from folding into low-frequency components of said analog voice signals during analog-to-digital conversion of said analog voice signals; and

conversion means (138) connected to said anti-aliasing filter means (134) for sampling said analog voice signals at a predetermined sample rate and digitally generating said sample signals in correspondence therewith.

~~25. A speaker-dependent command recognition~~

system (100) in accordance with claim 1 or claim 16, wherein said input means (102, 110) comprises a microphone circuit (102) and switch means (110) selectively actuable by the operator for initiating operation of said command recognition system.

17. A speaker-dependent command recognition system (100) in accordance with claim 1 or claim 13 wherein said means (150, 162, 174, 180, 186, 192) responsive to said sample signals comprises:

partitioning means (150) for partitioning said sample signals into frame signals, wherein each of said frame signals includes a predetermined number of said sample signals;

means (186, 192) responsive to said frame signals for generating auto-correlation coefficient signals, auto-correlation signals and predictor error signals indicative of relationships between sample signals within each of said frame signals; and

said means (214) for detecting the beginning and end of said unknown utterance comprises boundary detection means (214) generally responsive to said auto-correlation coefficient signals, said auto-correlation signals and said predictor error signals for generating said word boundary signals, wherein said utterance boundary signals comprise a beginning frame signal corresponding to the first frame signal having sample signals of said unknown utterance and an end frame signal corresponding to the last frame signal having sample signals of said unknown utterance.

18. A speaker-dependent command recognition system (100) in accordance with claim 26, wherein said boundary detection means (214) comprises:

means (214) for selecting a set of noise frame signals comprising a predetermined number of said frame signals;

means (214) jointly responsive to said auto-correlation coefficient signals and said predictor error signals for generating statistics signals representative of the statistical parameters of said noise frame signals and others of said frame signals; and

means (214) for comparing said statistics signals representative of said noise frame signals, and said mean and mean absolute deviation signals representative of other of said frame signals for determining which of said others of said frame signals include frame signals having said sample signals corresponding to said voice signals; and

means (214) for generating a beginning frame signal indicative of the first frame signal corresponding to said unknown utterance and for generating an end frame signal corresponding to the last frame of said unknown utterance, wherein said utterance boundary signals include said beginning frame signal and said end frame signal.

19.  A speaker-dependent command recognition system (100) in accordance with claim 1 or claim 13, wherein said means (150, 162, 174, 180, 186, 192) responsive to said sample signals comprises:

partitioning means (150) for partitioning said sample signals into frame signals, wherein each of said frame signals comprises a predetermined number of said sample signals and each frame signal comprises a second predetermined number of said sample signals within the next consecutive one of said frame signals;

signal scaling means (162) connected to said partitioning means (150) for adjusting the attenuation of each of said sample signals within one of said frame signals so that the scaling of each of said sample signals within one of said frame signals is equivalent;

high-pass filtering means (170) connected to said signal scaling means (162) for removing a DC component of each of said frame signals and for filtering lower-frequency components of each of said frame signals;

Hamming window means (180) connected to said filtering means (170) for applying a Hamming window scaling signal to each of said sample signals within each of said frame signals to reduce time domain discontinuities at the beginning and end of each of said frame signals.

20. A speaker-dependent command recognition system (100) in accordance with claim 19, wherein said means (150, 162, 174, 180, 186, 192) responsive to said sample signals further comprises:

auto-correlation coefficient (186) generator means connected to said Hamming window means (180) for generating sets of auto-correlation coefficient signals for each of said frame signals;

linear prediction coefficient parameter generator means (192) connected to said auto-correlation coefficient generator means (186) and responsive to said auto-correlation coefficient signals for generating predictor coefficient signals, partial correlation coefficient signals and predictor error signals representative of each of said frame signals;

auto-correlation signal generator means (186) responsive to said predictor coefficient signals for generating auto-correlation signals and applying said auto-correlation signals to said means (214) for detecting the beginning and end of said unknown utterance.

~~30. A method for identifying an unknown~~ utterance spoken by an operator as one word of a limited vocabulary of predetermined reference utterances the method comprising the steps of:

converting said unknown utterance spoken by said operator into sequential analog voice signals;

sampling said analog voice signals at a predetermined sample rate and generating sample signals ~~corresponding thereto;~~

FIG.1

0074667

**FIG. 2**

| NOISE FRAMES | UTTERANCE | NOISE FRAMES | UTTERANCE | NOISE FRAMES | UTTERANCE |
|---|---|---|---|---|---|

FIG. 3

FIG.4

0074667

4/6

5/6                                    0074667

FIG.5

0074667

FIG. 6

European Patent
Office

**EUROPEAN SEARCH REPORT**

**0074667**
Application number

EP 82 10 8472

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | G 10 L    1/04 |
| A | IEEE TRANSACTIONS ON ACOUSTICS, SPEECH AND SIGNAL PROCESSING, vol. ASSP-27, no. 6, December 1979, pages 583-587, New York (USA); L.R.RABINER et al.: "Speaker-independent isolated word recognition for a moderate size (54 word) vocabulary". *Figure 2* | 1,2,13 | |
| | --- | | |
| A | IEEE TRANSACTIONS ON ACOUSTICS, SPEECH AND SIGNAL PROCESSING, vol. ASSP-24, no. 6, December 1976, pages 550-558, New York (USA); M.R.SAMBUR et al.: "A statistical decision approach to the recognition of connected digits". *Figures 1,3* | 1,2,13 | |
| | | | **TECHNICAL FIELDS SEARCHED (Int. Cl. ³)** |
| | --- | | G 10 L    1/04 |
| A | COMPCON 80, 20th IEEE COMPUTER SOCIETY INTERNATIONAL CONFERENCE, 25th-28th February 1980, San Francisco, IEEE, pages 210-214, New York (USA); M.MURVEIT et al.: "Implementation of a low cost speech recognition system". *Figures 1,4* | 1,2,13 | |
| | ---          -/- | | |

The present search report has been drawn up for all claims

| Place of search THE HAGUE | Date of completion of the search 13-12-1982 | Examiner ARMSPACH J.F.A.M. |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | IEEE TRANSACTIONS ON ACOUSTICS, SPEECH AND SIGNAL PROCESSING, vol. ASSP-27, no. 6, December 1979, pages 729-733, New York (USA); S.MAITRA et al.: "A speech digitizer at 2400 Bits/s". *Figure 5* | 16 | |

TECHNICAL FIELDS SEARCHED (Int. Cl. ³)

The present search report has been drawn up for all claims

| Place of search | Date of completion of the search | Examiner |
|---|---|---|
| THE HAGUE | 13-12-1982 | ARMSPACH J.F.A.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82